# EUROPÄISCHE PATENTANMELDUNG

(11) **EP 3 076 342 A1**
(43) Veröffentlichungstag der Anmeldung: **05.10.2016**
(21) Anmeldenummer: 15000947.0
(22) Anmeldetag: 01.04.2015
(51) Int. Cl.: G06K 19/08, G06K 19/06, B42D 25/00

(54) **SYSTEM UMFASSEND WENIGSTENS EINEN MIKROPARTIKEL UND WENIGSTENS EINEN OPTISCHEN CODE, VERWENDUNG EINES DERARTIGEN SYSTEMS SOWIE VERFAHREN ZUR FÄLSCHUNGSSICHEREN KENNZEICHNUNG EINES OBJEKTS**

(71) Anmelder: 3S Simons Security Systems GmbH, 48301 Nottuln (DE)
(72) Erfinder: Simons, Rolf, 48301 Nottuln (DE)
(74) Vertreter: Wende, Christian Werner

(57) **Zusammenfassung**

Die vorliegende Erfindung betrifft ein System (1) umfassend wenigstens einen Mikropartikel (10) und wenigstens einen optischen Code (100), wobei der Mikropartikel (10) ein Mikropartikel (10) zur Ausbildung einer fälschungssicheren Kennzeichnung von Objekten (120) ist, wobei der Mikropartikel (10) wenigstens eine erste Schicht und wenigstens eine zweite Schicht aufweist und wobei der Code (100) ein OID-Code (110) und/oder ein Traceability-Code (115), insbesondere ein Barcode, Data-Matrix-Code oder QR-Code (115) ist.

Des Weiteren betrifft die vorliegende Erfindung eine Verwendung eines derartigen Systems (1) sowie ein Verfahren zur fälschungssicheren Kennzeichnung eines Objekts (120).

## Beschreibung

Die vorliegende Erfindung betrifft ein System bestehend aus wenigstens einem Mikropartikel, einem optischen Identifizierungscode sowie einem Auslesegerät, die Verwendung eines derartigen Systems sowie ein Verfahren zur fälschungssicheren Kennzeichnung eines Objekts.

Die Unterscheidung von Originalwaren und gefälschten Waren ist ein immer größer werdendes Problem. Dieses Problem wird insbesondere dadurch verstärkt, dass nachgemachte bzw. gefälschte Waren qualitativ immer besser werden und teilweise kaum mehr von den Originalwaren unterscheidbar sind. Darüber hinaus ist auch festzustellen, dass sich das Problem der Produkt- und Markenpiraterie nun nicht mehr nur im Wesentlichen auf z.B. nachgeahmte bzw. gefälschte Kleidung erstreckt, sondern zunehmend auch in sicherheitskritischen Bereichen wie beispielsweise im Kraftfahrzeug- und Flugzeugersatzteilbereich sowie auch im Pharmabereich auftritt.

Die Bereitstellung fälschungssicherer Erkennungsmerkmale für Originalwaren gewinnt daher zunehmend an Bedeutung.

Die DE 26 51 158 A1 offenbart diesbezüglich farbcodierte Kennmikroteilchen, die aus mehreren farbigen Schichten in einer vorgewählten Farbfolge bestehen, wobei die Farbfolge einen Kenncode darstellt. Die Mikroteilchen werden dabei aus Melamin-Alcyd-Harz hergestellt, wobei bspw. 7 Farbschichten übereinander mit einer Dicke von ca. 100 µm auf einer Polyesterträgerfolie von ca. 50 µm aufgebracht werden.

Die DE 198 53 764 A1 betrifft ein System für die Sicherung und Kennzeichnung von Produkten unter Verwendung von Mikropartikeln, die jeweils mehrere einen Code ausbildende Farbschichten aufweisen.

Aus der CN 1959698 A ist bereits ein Lesegerät bekannt, das auf der Grundlage eines sog. OID-Codes (OID: Optical Identification) entsprechende Informationen aufnehmen kann und diese optisch aufgenommenen Informationen sodann akustisch wiedergibt. Im Zusammenhang mit der OID-Technologie wird beispielsweise auf die US 7,549,597 B2, die US 7,770,805 B2, die US 2012/0298754 A1 und die WO 2013/121043 A1 verwiesen.

Aus der WO 2012/016987 A1 ist weiter ein Lesegerät bekannt, das es ermöglicht, einen in einem Buch aufgedruckten Code, der auf dem Optical Identification (OID) Code der Firma Sonix Technology basiert, Daten auslesen kann und diese sodann akustisch wiedergibt. Insbesondere wird es möglich, eine Referenzierung zwischen dem Inhalt des Buches sowie erweiterten Kontext-Informationen, beispielsweise eine Audiodatei mit einer passenden Aussprache eines Wortes, bereitzustellen. Die Anwendung erfolgt durch die Verknüpfung der gedruckten Wortinformation im Buch mit einer separaten Audiodatei, die beispielsweise in einem sog. Hör-/Lesestift niedergelegt ist, und unter Verwendung eines optischen, im Buch an geeigneter Stelle, zum entsprechenden Wort zugehörig, gedruckten Codes erfolgt. Dieser Code wird sodann benutzt, einen logischen Link zwischen Wort und Daten, z.B. einer Audiodatei herzustellen. Ein derartiger Code ist beispielsweise ein sog. OID-Code.

Aus der US 5,726,435 A ist weiter ein sog. Traceability-Code, insbesondere Barcode, Data-Matrix-Code oder QR-Code bekannt, wobei mittels dieses Codes einfach Informationen mittels eines Computers oder eines Smartphones aufgenommen werden können. Dabei werden binär-codierte Daten in einem zweidimensionalen Matrixfeld angeordnet, um ein binär-codiertes Muster zu ergeben. Dieses Muster kann beispielsweise mittels eines optischen Lesegerätes, z.B. einer Kamera eines Smartphones ausgelesen werden. In diesem Zusammenhang ist es möglich, dem Nutzer nach dem Auslesen des Barcodes, Data-Matrix-Codes oder QR-Codes Informationen direkt anzuzeigen oder den Nutzer auf eine Webseite zu leiten.

Im Zusammenhang mit der fälschungssicheren Kennzeichnung von Produkten ist es wünschenswert, den Vorgang der Verifizierung des fälschungssicheren Codes zu erleichtern und der prüfenden Person entsprechende Handreichungen einfach zukommen zu lassen.

Die bislang bekannten Lösungen setzen entsprechendes Hintergrundwissen voraus, das nicht zwangsläufig jederzeit verfügbar ist.

Es ist daher die Aufgabe der vorliegenden Erfindung, ein System der eingangs genannten Art in vorteilhafter Weise weiterzubilden, insbesondere dahingehend, dass der Verifizierungsvorgang einer fälschungssicheren Kennzeichnung von Produkten vereinfacht werden kann.

Diese Aufgabe wird erfindungsgemäß gelöst durch ein System umfassend wenigstens einen Mikropartikel und wenigstens einen optischen Code, wobei der Mikropartikel ein Mikropartikel zur fälschungssicheren Kennzeichnung von Produkten ist, wobei der Mikropartikel wenigstens eine erste Schicht und wenigstens eine zweite Schicht aufweist und wobei der Code ein OID-Code und/oder ein Traceability-Code, insbesondere ein Barcode, Data-Matrix-Code oder QR-Code ist.

Die Erfindung basiert auf dem Grundgedanken, ein erstes, nicht ohne Weiteres sichtbares Kennzeichnungssystem basierend auf Mikropartikeln mit einem optischen Kennzeichnungssystem, nämlich einem sog. OID-Code und/oder einem Traceability-Code, z.B. einem Barcode, Data-Matrix-Code oder QR-Code, zu verknüpfen. Durch diese Verknüpfung wird es möglich, beispielsweise den nicht ohne Weiteres auffindbaren Mikropartikel durch die zusätzliche Codierung mittels des OID-Codes und/oder des Traceability-Codes (z.B. Barcodes, Data-Matrix-Codes, QR-Codes) leichter auffinden zu können. Insbesondere können mit dem optischen Code Informationen einfach zugänglich gemacht werden, mittels derer die Mikropartikel leichter aufgefunden werden können.

Bei der Verwendung eines OID-Codes tritt noch hinzu, dass durch den OID-Code ein nahezu nicht sichtbares Kennzeichnungssystem verwendet werden kann. Bei der Verwendung eines Traceability-Codes, wie beispielsweise eines Barcodes, Data-Matrix-Codes oder QR-Codes ergibt sich der Vorteil, dass Lesegeräte zum Auslesen des Traceability-Codes weit verbreitet sind, da beispielsweise jedes Smartphone ohne Weiteres geeignet ist, den Traceability-Code auszulesen.

Bei dem Mikropartikel kann es sich beispielsweise um Mikropartikel wie bereits aus der WO 97/38409 A1 oder aus der EP 2 688 011 A1 bekannt, handeln. Des Weiteren kann vorgesehen sein, dass der Mikropartikel und der optische Code jeweils auf einer Oberfläche desselben Objekts angebracht ist. Dadurch wird es möglich, ein zu sicherndes Objekt fälschungssicher zu kennzeichnen und gleichzeitig die Überprüfung des gesicherten Objekts im Hinblick auf die fälschungssichere Kennzeichnung durch den Mikropartikel mittels des optischen Codes zu vereinfachen.

Darüber hinaus ist es möglich, dass das System weiter wenigstens ein Auslesegerät aufweist, mittels dessen der optische Code auslesbar ist. Denkbar ist in diesem Zusammenhang insbesondere, dass mittels des Auslesegeräts der optische Code dadurch ausgelesen werden kann, dass das Auslesegerät auf das gesicherte Objekt gerichtet wird bzw. auf diesem aufgesetzt wird oder in dessen Nähe gebracht wird, sodass das Auslesegerät den optischen Code auslesen kann. Weiter ist in diesem Zusammenhang möglich, dass mittels des Auslesegeräts der optische Code für den Nutzer ausgegeben werden kann, sodass der Nutzer die entsprechende Information im Hinblick auf die Sicherung durch den Mikropartikel bzw. die fälschungssichere Kennzeichnung durch den Mikropartikel erhalten kann.

Außerdem kann vorgesehen sein, dass das Auslesegerät ein akustisches Ausgabemittel aufweist, mittels dessen eine Audiodatei durch das Auslesegerät wiedergebbar ist, die Informationen betreffend die fälschungssichere Kennzeichnung enthält. Dadurch wird es beispielsweise möglich, dass mittels des Auslesegeräts der optische Code ausgelesen wird, sodann eine entsprechend mit dem optischen Code verknüpfte Audiodatei mittels des Auslesegeräts wiedergegeben wird, sodass der Nutzer Informationen betreffend die fälschungssichere Kennzeichnung durch den Mikropartikel erhält. Das Auslesegerät kann hierzu einen entsprechenden ersten Audiospeicher haben, in dem die Audiodatei hinterlegt ist. Darüber hinaus kann weiter ein zusätzlicher Speicher vorgesehen sein, in dem die Verknüpfung zwischen optischem Code und Audiodatei hinterlegt ist. Des Weiteren kann das Auslesegerät eine Steuereinheit oder einen Controller aufweisen, mittels dessen der ausgelesene optische Code verarbeitet wird, sodann die entsprechende Verknüpfung aus dem entsprechenden Speicher weiterverarbeitet wird und sodann die entsprechende Audiodatei ausgegeben wird. Die wenigstens eine zweite Schicht kann eine Farbschicht sein. Durch den Schichtaufbau des Mikropartikels kann eine Farbcodierung bereitgestellt werden, die einfach und zuverlässig eine fälschungssichere Kennzeichnung ermöglicht.

In diesem Zusammenhang ist insbesondere denkbar, dass ein zu sicherndes Objekt wie ein Produkt, z.B. ein Bekleidungsstück, eine Tasche, ein Schuh, ein Medikament, ein Dokument, ein Etikett (insbesondere Sicherheitsetikett), Verpackungsmaterial wie Umverpackungskartonagen, Blister oder dergleichen oder auch z.B. ein Originalersatzteil mit einem aus Mikropartikeln bestehenden Code versehen wird, wobei der Code derart angebracht ist, dass er nahezu bzw. nicht ohne Weiteres ersichtlich ist. Durch das Auslesegerät wird nun die mittels der Mikropartikel ausgebildete fälschungssichere Kennzeichnung dadurch leichter aufgefunden, indem man das Auslesegerät wenigstens in die Nähe des Objekts bringt, um mittels des Auslesegeräts den optischen Code auszulesen. Durch das Auslesen des Codes kann dann entsprechend die im Zusammenhang mit dem optischen Code hinterlegte Audioinformation wiedergegeben werden.

Des Weiteren kann vorgesehen sein, dass auch die erste Schicht eine Farbschicht ist.

Denkbar ist aber auch, dass die erste Schicht eine außenliegende Schicht des Mikropartikels bildet und wenigstens auf dieser außenliegenden Seite zumindest ein auf dieser Seite vorangebrachtes Zeichen angeordnet ist, insbesondere wobei das zumindest eine Zeichen zumindest ein Teil eines Hologramms und/oder eines Aufdrucks ist, vorzugsweise wobei das Zeichen wenigstens einen Buchstaben, wenigstens einen Teil eines Bildzeichens und/oder wenigstens eines Wort-/Bildzeichens, insbesondere eines Logos und/oder Markenzeichens ist oder ein derartiges Zeichen umfasst. Denkbar ist beispielsweise, dass das Zeichen ein Markenzeichen des Herstellers des Objekts ist. Durch dieses zusätzliche Sicherungselement des vorangebrachten Zeichens wird ein weiteres Identifizierungsmerkmal hinzugefügt.

Des Weiteren kann vorgesehen sein, dass der Mikropartikel wenigstens eine Fläche aufweist, die derart beschaffen ist, dass die übereinanderliegenden Schichten ersichtlich sind. Dadurch ergibt sich der Vorteil, dass eine Farbcodierung durch die mehreren übereinanderliegenden Schichten aufgebaut ist und durch die Anordnung des Mikropartikels einfach z.B. durch ein Lichtmikroskop überprüft werden kann.

Darüber hinaus ist denkbar, dass wenigstens eine weitere Schicht, vorzugsweise mehrere weitere Schichten vorgesehen sind, vorzugsweise auf der zweiten Schicht aufgetragen und/oder angeordnet sind, vorzugsweise wobei die weiteren Schichten Farbschichten sind, sodass vorzugsweise die zweite Schicht und die weiteren Schichten eine Anordnung von Schichten ergeben, die derart beschaffen sind, dass durch die Schichten ein Farbcode ausgebildet wird, wobei die Schichten vorzugsweise eine Schichtstärke im Bereich zwischen ca. 0,5 µm bis ca. 50 µm vorzugsweise ca. 0,8 µm aufweisen. Denkbar ist in diesem Zusammenhang beispielsweise, dass ein Schichtaufbau aus 7 oder mehr Schichten ausgebildet wird. Durch einen derartigen Schichtaufbau können eine Vielzahl von unterschiedlichen Codes bereitgestellt werden, sodass unterschiedlichen Objekten oder Nutzern einzelne Farbcodes zugewiesen werden können.

Des Weiteren betrifft die vorliegende Erfindung die Verwendung eines Systems zur fälschungssicheren Kennzeichnung von Objekten. Sämtliche vorstehend beschriebenen Merkmale und Vorteile können einzeln oder in Kombination oder auch im Zusammenhang mit der Verwendung des Systems Anwendung finden.

Darüber hinaus betrifft die vorliegende Erfindung ein Verfahren zur fälschungssicheren Kennzeichnung eines Objekts, wenigstens aufweisend die folgenden Schritte:
- das zu sichernde Objekt wird mit wenigstens einem Mikropartikel versehen, wobei der Mikropartikel ein Mikropartikel zur fälschungssicheren Kennzeichnung von Objekten ist und wobei der Mikropartikel wenigstens eine erste Schicht und wenigstens eine zweite Schicht aufweist;
- das zu sichernde Objekt wird mit wenigstens einem optischen Code versehen, wobei der optische Code ein OID-Code und/oder ein Traceability-Code, insbesondere ein Barcode, Data-Matrix-Code oder QR-Code ist.

Sämtliche vorgenannten Merkmale und Vorteile des Systems können auch im Zusammenhang mit dem Verfahren zur fälschungssicheren Kennzeichnung eines Objekts Anwendung finden und dies einzeln oder in entsprechender Kombination miteinander.

Des Weiteren betrifft die vorliegende Erfindung ein Verfahren, bei dem weiter mittels eines Auslesegeräts der optische Code ausgelesen wird und wobei anhand des optischen Codes zumindest eine Audiodatei durch das Auslesegerät wiedergegeben wird, die Informationen betreffend die fälschungssichere Kennzeichnung enthält.

Weitere Einzelheiten und Vorteile der Erfindung sollen nun anhand eines in den Zeichnungen näher dargestellten Ausführungsbeispiels beschrieben werden.

Es zeigen:
- Figur 1:: eine Vielzahl von Mikropartikeln gemäß des erfindungsgemäßen Systems, der erfindungsgemäßen Verwendung eines Systems sowie eines erfindungsgemäßen Verfahrens gemäß einem Ausführungsbeispiel der Erfindung; und
- Figur 2:: eine schematische Darstellung des erfindungsgemäßen Systems, der erfindungsgemäßen Verwendung des Systems sowie eines erfindungsgemäßen Verfahrens zur fälschungssicheren Kennzeichnung eines Objekts.

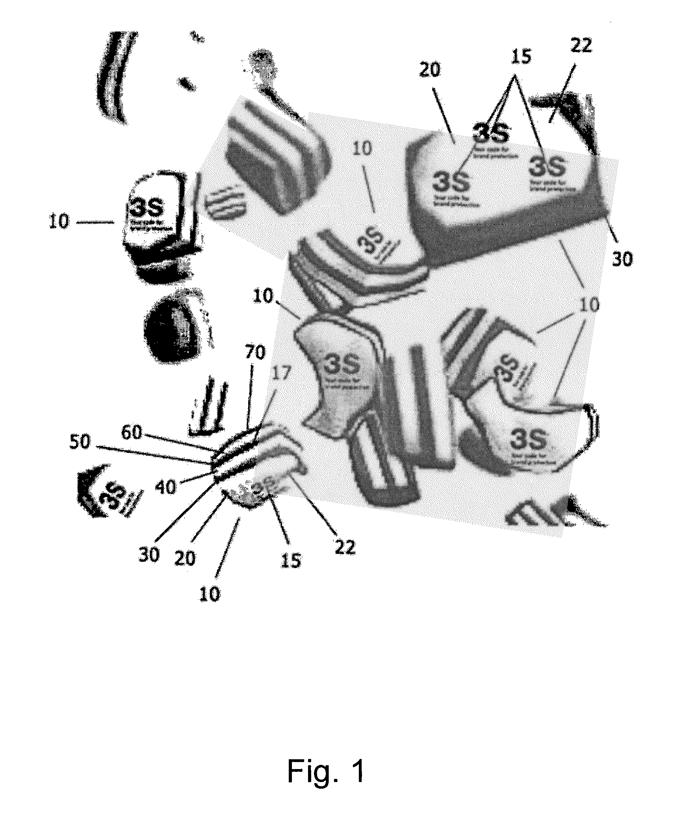

Figur 1 zeigt als Bestandteil des erfindungsgemäßen Systems 1 eine Vielzahl von Mikropartikeln 10.

Die Mikropartikel 10 weisen dabei wenigstens eine erste Schicht 20 auf, auf der im Herstellungsverfahren die weiteren Schichten 30, 40, 50, 60, 70 aufgetragen werden. Die erste Schicht 20 ist somit eine Trägerschicht 20.

Die Schichten 30, 40, 50, 60, 70 sind dabei Farbschichten, die auf die Trägerschicht 20 aufgetragen werden.

Die erste Schicht 20 bzw. Trägerschicht 20 bildet eine außen liegende Seite 22 des Mikropartikels 10. Auf dieser außen liegenden Seite 22 ist dabei zumindest ein Zeichen 15, hier ein Logo 15 bzw. die Marke eines Unternehmens 15 angeordnet. Dieses Zeichen 15 ist dabei bereits im Vorfeld auf der Schicht 20 aufgebracht bzw. aufgetragen.

Grundsätzlich ist aber auch denkbar, dass die erste Schicht 20 bzw. Trägerschicht 20 eine Farbschicht ist, auf der kein Zeichen 15 angebracht ist.

Insbesondere kann es sich bei der Schicht 20 um eine Trägerfolie, insbesondere um eine Polyesterfolie bzw. eine PET-Folie handeln. Die Zeichen 15 können dabei aufgedruckt oder in sonstiger Form auf der Trägerfolie 20 aufgebracht sein. Grundsätzlich ist auch denkbar, dass die Zeichen 15 als Schrift im Nanobereich auf der Trägerschicht 20 aufgebracht sind. Denkbar ist beispielsweise, dass die Schrifthöhe oder die Zeichenhöhe 1 nm oder mehr beträgt.

Es ist ferner denkbar, dass die Trägerfolie 20 auf der Seite 22 mehrere Zeichen 15 in Form von Hologrammen oder Aufdrucken aufweist.

Die Mikropartikel 10 sind dabei derart beschaffen, dass die Mikropartikel 10 mit jeder ihrer Abmessungen ca. 100 µm nicht überschreiten, vorzugsweise 50 µm, besonders bevorzugt 8 µm. Im in der Figur gezeigten Ausführungsbeispiel sind die Abmessungen der Mikropartikel 10 im Bereich zwischen ca. 8 µm bis ca. 100 µm gewählt, wobei jedoch diese Untergrenze und Obergrenze nicht unter- bzw. überschritten wird.

Die Schichten 30, 40, 50, 60, 70 sind Farbschichten, hier beispielsweise eine rote Farbschicht 30, eine weiße Farbschicht 40, eine blaue Farbschicht 50, eine weitere weiße Farbschicht 60 und eine schwarze Farbschicht 70.

Der Mikropartikel 10 weist ferner wenigstens eine Fläche 17 auf, die derart beschaffen ist, dass die übereinander liegenden Farbschichten 30, 40, 50, 60, 70 ersichtlich sind. Die Fläche 17 ist eine Seitenfläche 17, die durch den Zerkleinerungsprozess während der Herstellung des Mikropartikels 10 entsteht, also beispielsweise im Wesentlichen eine Schnittkante oder eine Bruchkante ist.

Die Anordnung dieser Farben bzw. Farbschichten 30, 40, 50, 60, 70 bildet einen Farbcode aus, der in Kombination mit dem Zeichen 15, hier beispielsweise dem Markenzeichen eines Unternehmens, insgesamt einen fälschungssicheren Code ausbildet. Dieser Code kann einfach beispielsweise mittels eines Stabmikroskops bzw. Auflichtmikroskops überprüft werden.

Die Mikropartikel 10 können dabei in ein Etikett eingebracht oder auf einem Etikett aufgetragen werden, beispielsweise mittels eines Aufstriches wie beispielsweise eines Klarlackes oder dergleichen, wie ein transparentes Harz oder ein transparenter Kleber.

Grundsätzlich ist auch denkbar, dass die Mikropartikel 10 in einem Aufstrich, wie beispielsweise einer Farbe oder einem Lack dispergiert werden und somit direkt auf dem zu kennzeichnenden Produkt aufgebracht werden können.

Die Herstellung der Mikropartikel 10 kann beispielsweise gemäß der EP 2 688 011 A1 oder der DE 26 51 158 A1 erfolgen.

Die Farbschichten können einen Farbcode gemäß der DE 198 53 764 A1 ausbilden.

Vorteilhafterweise wird dabei die Größe der Mikropartikel 10 in einem Bereich zwischen ca. 8 µm bis ca. 100 µm gewählt, da in diesem Bereich jedenfalls sichergestellt ist, dass wenigstens ein Zeichen 15 auf der außen liegenden Seite 22 der Trägerschicht 20 erkennbar ist.

Wie sich dies aus Figur 1 ergibt, sind die Mikropartikel 10 aufgrund des Zerkleinerungsvorgangs nicht identisch, sondern hinsichtlich ihrer Formgebung randomisiert, d.h. die Formgebung der Partikel ist zufällig und nicht vordefiniert.

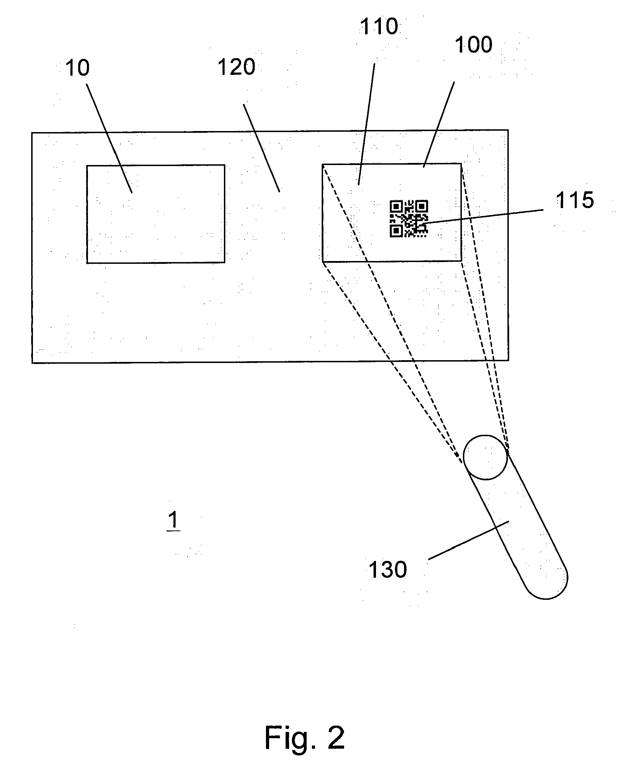

Figur 2 zeigt in schematischer Darstellung ein erfindungsgemäßes System 1 umfassend wenigstens einen vorstehend beschriebenen Mikropartikel 10, insbesondere eine Ansammlung mehrerer Mikropartikel 10 sowie wenigstens einen im Zusammenhang mit der Mikropartikelkennzeichnung aufgebrachten optischen Code 100.

Der optische Code 100 besteht hier aus einem OID-Code 110 sowie einem Traceability-Code, nämlich einem Barcode, Data-Matrix-Code oder QR-Code 115.

Die Mikropartikel 10 und der optische Code 100 sind auf einem Objekt 120 aufgebracht.

Das Objekt 120 kann beispielsweise ein Produkt sein, dass gesichert werden soll. Beispielsweise kann das Produkt ein Bekleidungsstück, eine Tasche, ein Schuh, ein Medikament, ein Dokument, ein Etikett (insbesondere Sicherheitsetikett), ein Verpackungsmaterial, wie beispielsweise Umverpackungskartonagen, Blister oder dergleichen oder zum Beispiel auch ein Originalersatzteil (z.B. für Kraftfahrzeuge, Luftfahrzeuge usw.) sein.

Weiter weist das System 1 ein Auslesegerät 130 auf.

Der OID-Code 110 ist dabei ein OID-Code 110, wie er beispielsweise in der US 7,549,597 B2, der US 7,770,805 B2, der US 2012/0298754 A1 und der WO 2013/121043 A1 beschrieben ist.

Der Traceability-Code 115 ist ein Barcode, Data-Matrix-Code oder QR-Code 115, wie er beispielsweise in der US 5,726,435 A beschrieben ist.

Dabei sind der Mikropartikel 10 und der optische Code 100 jeweils auf einer Oberfläche desselben Objekts 120 angebracht.

Des Weiteren weist das System ein Auslesegerät 130 auf, mittels dessen der optische Code 100 auslesbar ist.

Weiter weist das Auslesegerät 130 ein akustisches Ausgabemittel auf, mittels dessen eine Audiodatei durch das Auslesegerät 130 wiedergebbar ist, die Informationen betreffend die fälschungssichere Kennzeichnung enthält.

Das Auslesegerät 130 kann dabei beispielsweise ein modifiziertes Auslesegerät wie die aus der WO 2012/016987 A1 bekannte stiftförmige Vorrichtung zum Auslesen von OID-Codes und zur Wiedergabe entsprechend mit dem OID-Code verknüpfter Audio-Dateien sein.

Das erfindungsgemäße Verfahren zur fälschungssicheren Kennzeichnung eines Objekts 120 weist dabei wenigstens die folgenden Schritte auf: Das zu sichernde Objekt 120 wird dabei mit wenigstens einem Mikropartikel 10, vorzugsweise mit mehreren Mikropartikeln 10 versehen, wobei der bzw. die Mikropartikel 10 zur fälschungssicheren Kennzeichnung des Objekts 120 dienen. Das zu sichernde Objekt 120 wird zusätzlich mit einem optischen Code 100 versehen, wobei dieser optische Code 100 ein OID-Code 100 ist.

Um nun mittels des Auslesegeräts 130 sicher akustisch wiedergeben zu lassen, wo die Kennzeichnung mittels der Mikropartikel 10 an dem Objekt 120 angebracht ist, wird nun das Auslesegerät 130 in die Nähe einer der Oberflächen des Objekts 120 gebracht und dort ggf. hin und her bewegt. Sobald das Auslesegerät 130 in die Nähe des optischen Codes 100 kommt, um diesen auslesen zu können, wird anhand des Auslesemoduls der optische Code 100 analysiert und ausgelesen, die dadurch gewonnenen Daten mit den in einem ersten Speicher hinterlegten Verknüpfungsdaten abgeglichen und schließlich anhand des Controllers des Auslesegeräts 130 die Verknüpfungsdaten mit den in einem zweiten Speicher hinterlegten Audiodaten abgeglichen.

Danach kann dann mittels des Auslesegeräts 130 und mittels des Controllers des Auslesegeräts 130 die korrekte Audiodatei aufgerufen und entsprechend wiedergegeben werden.

Der Nutzer erhält somit Informationen betreffend die Anbringung und die Beschaffenheit der fälschungssicheren Kennzeichnung mittels der Mikropartikel, ggf. auch Informationen betreffend den Hersteller des Objekts.

Der Barcode, Data-Matrix-Code oder QR-Code 115 kann darüber hinaus mittels des Auslesegeräts 130 oder mittels eines nicht näher dargestellten Smartphones, das einen sog. QR-Code-Scanner aufweist, ausgelesen werden. Möglich ist auch, dass ein Smartphone die Funktion des Auslesegeräts 130 übernimmt.

Denkbar ist in diesem Zusammenhang insbesondere, dass mittels des Smartphones der Traceability-Code 115 bzw. der Barcode, Data-Matrix-Code oder QR-Code 115 eingescannt wird.

Daraufhin kann der Nutzer Informationen betreffend die Kennzeichnung durch die Mikropartikel 10 erhalten. Denkbar ist beispielsweise, dass das Smartphone eine Software ("App") aufweist, in der die Information betreffend die Kennzeichnung aus den Mikropartikeln 10 entsprechend hinterlegt ist und sodann optisch und akustisch wiedergegeben wird. Denkbar ist beispielsweise, dass eine textbasierte und/oder bildbasierte Information zusammen mit einer Audiodatei ausgegeben wird, wenn der entsprechende Barcode, Data-Matrix-Code oder QR-Code 115 gescannt wurde. Denkbar ist in diesem Zusammenhang auch, dass Informationen betreffend das zu sichernde Objekt 120 ausgegeben werden, beispielsweise bei Produkten aus dem Pharmabereich, wie der Name des Pharmazeutikums, die Inhaltsstoffe, ggf. Verwendungshinweise sowie Angabe von Nebenwirkungen und auch dies im Zusammenhang mit der Kennzeichnung und der Auffindbarkeit der Kennzeichnung durch die Mikropartikel 10. Es ist auch möglich, dass bei Maschinen oder Fahrzeuge oder Fluggeräten oder Teile dieser Produkte Informationen betreffend die Produkte, wie technische Angabe und dergleichen mittels des Barcodes, Data-Matrix-Codes oder QR-Codes abrufbar gemacht werden. Denkbar ist insbesondere, die Informationen, die auch auf einem Typenschild angegeben werden, zugänglich zu machen.

Des Weiteren ist denkbar, dass nach dem Scannen des Barcodes, Data-Matrix-Codes oder QR-Codes 115 der Nutzer auf eine Internetseite, die mittels des Smartphones abrufbar ist, geleitet wird. Dies kann beispielsweise eine allgemeine Seite sein, die Informationen zu der Kennzeichnung mittels der Mikropartikel 10 aufweist. Denkbar ist aber auch, dass eine Verlinkung zu einer Datenbank erfolgt, die Informationen betreffend das Produkt aufweist. Hier können dann Angaben zum Hersteller und zum Produkt, wie beispielsweise technische Angaben oder Inhaltsangaben abrufbar sein.

## Patentansprüche

1. System (1) umfassend wenigstens einen Mikropartikel (10) und wenigstens einen optischen Code (100), wobei der Mikropartikel (10) ein Mikropartikel (10) zur Ausbildung einer fälschungssicheren Kennzeichnung von Objekten (120) ist, wobei der Mikropartikel (10) wenigstens eine erste Schicht und wenigstens eine zweite Schicht aufweist und wobei der Code (100) ein OID-Code (110) und/oder ein Traceability-Code (115), insbesondere ein Barcode, Data-Matrix-Code oder QR-Code (115) ist.

2. System (1) nach Anspruch 1, **dadurch gekennzeichnet, dass** der Mikropartikel (10) und der optische Code (100) jeweils auf einer Oberfläche desselben Objekts (120) angebracht sind.

3. System (1) nach Anspruch 1 oder 2, **dadurch gekennzeichnet, dass** das System (1) weiter wenigstens ein Auslesegerät (130) aufweist, mittels dessen der optische Code (100) auslesbar ist.

4. System (1) nach einem der vorhergehenden Ansprüche, **dadurch gekennzeichnet, dass** das Auslesegerät (130) ein akustisches Ausgabemittel aufweist, mittels dessen eine Audiodatei durch das Auslesegerät (130) wiedergebbar ist, die Informationen betreffend die fälschungssichere Kennzeichnung enthält.

5. System (1) nach einem der vorhergehenden Ansprüche, **dadurch gekennzeichnet, dass** wenigstens die zweite Schicht (30) eine Farbschicht ist.

6. System (1) nach einem der vorhergehenden Ansprüche, **dadurch gekennzeichnet, dass** die erste Schicht (20) eine Farbschicht ist.

7. System (1) nach einem der Ansprüche 1 bis 5, **dadurch gekennzeichnet, dass** die erste Schicht eine außen liegende Seite des Mikropartikels (10) bildet und wenigstens auf dieser außen liegenden Seite zumindest ein auf dieser Seite vorangebrachtes Zeichen angeordnet ist, insbesondere wobei das zumindest eine Zeichen zumindest ein Teil eines Hologramms und/oder eines Aufdruckes ist, wobei vorzugsweise das Zeichen wenigstens einen Buchstaben, wenigstens ein Teil eines Bildzeichens und/oder wenigstens eines Wort-/Bildzeichens, insbesondere eines Logos und/oder Markenzeichens ist oder ein derartiges Zeichen umfasst.

8. System nach einem der vorhergehenden Ansprüche, **dadurch gekennzeichnet, dass** der Mikropartikel (10) wenigstens eine Fläche aufweist, die derart beschaffen ist, dass die übereinander liegenden Schichten ersichtlich sind.

9. System nach einem der vorhergehenden Ansprüche, **dadurch gekennzeichnet, dass** wenigstens eine weitere Schicht, vorzugsweise mehrere weitere Schichten vorgesehen sind, vorzugsweise auf der zweiten Schicht aufgetragen und/oder angeordnet sind, vorzugsweise wobei die weiteren Schichten Farbschichten sind, so dass vorzugsweise die zweite Schicht und die weiteren Schichten eine Anordnung von Schichten ergeben, die derart beschaffen ist, dass durch die Schichten ein Farbcode ausgebildet wird, wobei die Schichten vorzugsweise jeweils eine Schichtstärke im Bereich zwischen ca. 0,5 µm bis ca. 50 µm, vorzugsweise ca. 0,8 µm, aufweisen.

10. Verwendung eines Systems (1) nach einem der vorhergehenden Ansprüche zur fälschungssicheren Kennzeichnung von Objekten (120).

11. Verfahren zur fälschungssicheren Kennzeichnung eines Objekts (120), wenigstens aufweisend die folgenden Schritte:
- das zu sichernde Objekt (120) wird mit wenigstens einem Mikropartikel 10 versehen, wobei der Mikropartikel (10) ein Mikropartikel (10) zur fälschungssicheren Kennzeichnung von Objekten (120) ist und wobei der Mikropartikel (10) wenigstens eine erste Schicht (20) und wenigstens eine zweite Schicht (30) aufweist; und
- das zu sichernde Objekt (120) wird mit wenigstens einem optischen Code (100) versehen, wobei der optische Code (100) ein OID-Code (110) und/oder ein Traceability-Code (115), insbesondere ein Barcode, Data-Matrix-Code oder QR-Code (115) ist.

12. Verfahren nach Anspruch 11, **dadurch gekennzeichnet, dass** weiter mittels eines Auslesegeräts (130) der optische Code (100) ausgelesen wird und wobei anhand des optischen Codes (100) zumindest eine Audiodatei durch das Auslesegerät (130) wiedergegeben wird, die Informationen betreffend die fälschungssichere Kennzeichnung enthält.
